# EUROPÄISCHE PATENTANMELDUNG

(11) **EP 4 181 040 A1**
(43) Veröffentlichungstag der Anmeldung: **17.05.2023**
(21) Anmeldenummer: 21208281.2
(22) Anmeldetag: 15.11.2021
(51) Int. Cl.: G06Q 10/06, B01F 35/21, B60S 3/04

(54) **BETREIBER-APP ZUR CHEMIEBESTELLUNG**

(71) Anmelder: WashTec Holding GmbH, 86153 Augsburg (DE)
(72) Erfinder: SATTLER, Andreas, 81543 München (DE); WOLFINGER, Simon, 86739 Ederheim (DE); SCHREINER, Michael, 86179 Augsburg (DE)
(74) Vertreter: Schwarz, Claudia

(57) **Zusammenfassung**

Eine Technik zur Prognose eines Nachfüllerfordernisses für Waschsubstanzen zur Ausführung einer Fahrzeugwäsche mittels einer Waschanlage wird bereitgestellt. Die Technik umfasst ein Steuermodul (100) für die Waschanlage zur Ausführung der Fahrzeugwäsche, wobei das Steuermodul (100) zum Bereitstellen eines Auffülldatensatzes (ads) zur Prognose eines Nachfüllerfordernisses für Waschsubstanzen bestimmt ist. Das Steuermodul (100) umfasst zumindest eine Messeinrichtung (12A, 12B, 12C) zum Erfassen von aktuellen Füllstandsdaten (fsd) für jeder der Waschsubstanzen und eine Datenverbindung zwischen der zumindest einen Messeinrichtung (12A, 12B, 12C) und dem Steuermodul (100) zum Übermitteln der erfassten Füllstandsdaten (fsd) an das Steuermodul (100). Dabei ist das Steuermodul (100) zum Ausführen einer Prognosefunktion bestimmt zur Berechnung eines Auffülldatensatzes (ads), in dem eine Prognose des Nachfüllerfordernisses encodiert ist, auf Basis von Planungsdaten (*pds*), die geplante Fahrzeugwäschen an der Waschanlage unter Berücksichtigung von waschsubstanz-spezifischen Verbrauchsdaten (*vds*) repräsentieren und wobei das Steuermodul (100) zum Ausgeben des berechneten Auffülldatensatzes (ads) zur Prognose eines waschsubstanz-spezifischen Nachfüllerfordernisses auf einem Ausgabegerät (20) bestimmt ist.

## Beschreibung

Die vorliegende Erfindung liegt auf dem Gebiet von Waschanlagen für Transportmittel. Die Erfindung betrifft insbesondere ein Verfahren und System zur Prognose von Nachfüllerfordernissen von Ressourcen, die für einen Waschvorgang der Transportmittel benötigt werden, wie beispielsweise Waschsubstanzen.

Transportmittel, wie beispielsweise Kraftfahrzeuge, Lastkraftwagen und/oder Busse sind Umwelteinflüssen ausgesetzt. Diese Umwelteinflüsse können natürlichen oder anthropogenen Ursprungs sein und zu Verschmutzung der Transportmittel führen. Unter den Gesichtspunkten von Sicherheit und Ästhetik empfiehlt es sich, das Transportmittel regelmäßig zu reinigen bzw. zu waschen. Waschanlagen bieten die dafür notwendigen Waschservices. Dort können Transportmittel voll- oder teilautomatisch oder manuell gewaschen werden. Für den Waschvorgang sind Ressourcen, insbesondere Waschsubstanzen, in ausreichender Menge notwendig, damit das gewünschte Reinigungsergebnis erzielt werden kann. Der Verbrauch der Waschsubstanzen kann durch verschiedene Faktoren und technische Gegebenheiten der Waschanlage beeinflusst werden und lässt sich dadurch bei im Stand der Technik bekannten Systemen meist schwer vorhersagen. Eine rechtzeitige und realistische Vorhersage eines Waschsubstanzverbrauchs ist jedoch für den Betreiber der Waschanlage wichtig, da bei fehlenden Reinigungsressourcen die Qualität der Wäsche nicht sichergestellt werden kann.

Davon ausgehend liegt der vorliegenden Anmeldung die Aufgabe zugrunde, einen Ansatz zu schaffen, der den Betreibern einer Waschanlage die Prognose eines Nachfüllerfordernisses für die jeweiligen auf der Waschanlage benötigen Waschsubstanzen zur Verfügung stellt.

Diese Aufgabe wird durch die beiliegenden Patentansprüche gelöst, insbesondere durch ein Verfahren, ein Steuermodul, ein System zum Bereitstellen eines Auffülldatensatzes zur Prognose eines Nachfüllerfordernisses für Waschsubstanzen und durch ein Computerprogramm zum Ausführen des Verfahrens zur Prognose eines Nachfüllerfordernisses. Vorteilhafte Ausführungsformen und Weiterbildungen der Erfindung finden sich in den Unteransprüchen und in der nachfolgenden Beschreibung.

Gemäß einem ersten Aspekt wird die Aufgabe gelöst durch ein Verfahren zur Prognose eines Nachfüllerfordernisses für Waschsubstanzen zur Ausführung einer Fahrzeugwäsche mittels einer Waschanlage. Das Verfahren umfasst die folgenden Verfahrensschritte:
- Einlesen von aktuell erfassten Füllstandsdaten für jeder der Waschsubstanzen mittels jeweils einer Messeinrichtung, wobei das Einlesen über eine Einleseschnittstelle erfolgt;
- Auf einem Steuermodul: Ausführen einer Prognosefunktion zur Berechnung eines Auffülldatensatzes, in dem eine Prognose des Nachfüllerfordernisses encodiert ist, auf Basis von Planungsdaten, die geplante Fahrzeugwäschen an der Waschanlage unter Berücksichtigung von waschsubstanz-spezifischen Verbrauchsdaten und den erfassten Füllstandsdaten repräsentieren und
- Ausgeben des berechneten Auffülldatensatzes zur Prognose eines waschsubstanz-spezifischen Nachfüllerfordernisses auf einem Ausgabegerät.

Das Nachfüllerfordernis kann somit schon im Vorfeld und rechtzeitig durch das computerimplementierte Verfahren erfasst und gemeldet werden im Sinne einer prädiktiven Vorratsmeldung in Bezug auf die technischen Ressourcen der Fahrzeugwaschanlage. Damit wird sichergestellt, dass stets ausreichend Waschsubstanzen zur Verfügung stehen und der Waschvorgang überhaupt beziehungsweise ordnungsgemäß durchgeführt werden kann und nicht unterbrochen werden muss, um Waschsubstanzen nachzufüllen.

Im Folgenden werden die Begrifflichkeiten der Erfindung näher erläutert.

Das Verfahren ist computer-implementiert. Das Steuermodul dient zur Verarbeitung von unterschiedlichen Daten. Es wird ein Auffülldatensatz berechnet. Dabei werden Füllstandsdaten und optional Verbrauchsdaten und/oder Planungsdaten algorithmisch bearbeitet. Die Computer-Implementierung kann in Software und/oder in Hardware umgesetzt werden.

Bei den Füllstandsdaten handelt es sich um einen elektronischen Datensatz, der den aktuellen Füllstand in einem Vorratsbereich oder einem Teil davon repräsentiert. Die Füllstandsdaten werden von einer Messeinrichtung erfasst und über eine Einleseschnittstelle eingelesen. Bei der Einleseschnittstelle kann es sich um ein lokales Netzwerk (z.B. Funk) oder um ein WAN (wide area network, z.B. das Internet) handeln. Das lokale Netzwerk kann drahtgebunden oder drahtlos ausgebildet sein.

Der Auffülldatensatz ist ein elektronischer Datensatz, in dem ein (zukünftig anstehendes) Auffüllerfordernis für eine Waschsubstanz encodiert ist. Der Auffülldatensatz wird algorithmisch mittels einer Prognosefunktion berechnet. Die Prognosefunktion verarbeitet die erfassten Füllstandsdaten und optional Planungsdaten und/oder Verbrauchsdaten. Der berechnete Auffülldatensatz kann auf einem Ausgabegerät ausgegeben werden. Kumulativ oder alternativ kann der berechnete Auffülldatensatz verwendet werden, um über ein angeschlossen Gatewayknoten zum Datenaustausch mit externen und/oder entfernten (also nicht im Bereich der Waschanlage angeordneten) Recheneinheiten (z.B. mittels einem WAN, insbesondere zur Verfügungstellung eines Internetzugangs) und insbesondere mit einer Recheneinheit eines Lieferanten von Waschsubstanzen automatisch einen Bestellvorgang auszulösen. In einer vorteilhaften Weiterbildung kann der automatische Bestellvorgang, der in einem Bestelldatensatz codiert ist, nochmals zur Verifikation z.B. auf dem Ausgabegerät ausgegeben werden, um ein Verifikationssignal zu empfangen, auf das hin der Bestellvorgang dann automatisch ausgelöst wird.

Der Begriff "Planungsdaten" ist als elektronischer Datensatz zu verstehen, der Eigenschaften von an der Waschanlage geplanten Wäschen codiert. Die Eigenschaften werden codiert in Parametern und können z.B. eine Anzahl, ein Typ (Waschprogramm), Fahrzeugtyp von geplanten Wäschen sein. Die Planungsdaten können statistische Werte (z.B. Mittelwerte) umfassen, die in der Vergangenheit aufgezeichnet wurden und, die den üblichen Bedarf an Waschsubstanz über einen Zeitverlauf und/oder in Abhängigkeit eines Standorts der Waschanlage repräsentieren. Auch können die Planungsdaten den für eine Waschsubstanz spezifischen Verbrauch als weitere Einflussgröße für die Prognosefunktion beinhalten.

Der Begriff "Verbrauchsdaten" ist als elektronischer Datensatz zu verstehen, der den jeweiligen Verbrauch der einzelnen Waschsubstanz indiziert. Weiterhin können Verbrauchsdaten für jeweils eine Waschsubstanz berechnet werden aus einer erfassten Dosiereinstellung einer digitalen Pumpe, die zum Bereitstellen der jeweiligen Waschsubstanz verwendet wird.

Der Begriff "digitale Pumpe" meint in diesem Kontext eine Pumpe mit einer internen oder angeschlossenen elektronischen Einheit, die analoge Signale über einen AD-Konverter umwandelt und digitale Signale verarbeiten und/oder an andere elektronische Bauteile versenden kann. Die digitale Pumpe umfasst somit auch solche Dosierpumpen, bei denen lediglich der Hub direkt oder indirekt gemessen wird, aber der restliche Teil der Pumpe analog ist. Dies kann z.B. durch eine Luftdurchflussmessung an einer pneumatischen Dosierpumpe realisiert sein, die eine manuelle Hubverstellung aufweist.

Zur Berechnung der Verbrauchsdaten können die Verbräuche der einzelnen Waschsubstanzen jeweils separat und dediziert bzw. einzeln für eine jeweilige Waschsubstanz bestimmt werden. Dies kann über bekannte Dosiereinstellung einer digitalen Pumpe und /oder durch die automatische Erfassung des Füllstandes im Maschinenkanister über Füllstandssensoren erfolgen. Aus den eingelesenen bzw. erfassten Füllstandsdaten können in einer elektronischen Einheit mittels einer automatischen Methode die Verbrauchsdaten ermittelt werden. Die ermittelten Verbräuche können auf die geleisteten Wäschen umgelegt werden. Dies kann z.B. über Einschaltzeit von Sprühbogen und Dosierpumpe der Waschanlage erfolgen. Der Verbrauch pro Wäsche variiert, abhängig vom Waschprogramm, von den Einstellungen (z.B. der Dosierpumpe) und/oder der Fahrzeuggröße und/oder dem Verschmutzungsgrad.

Um einen Verbrauch zu ermitteln, der unabhängig von Waschprogramm und/oder Fahrzeugtyp und/oder dem Verschmutzungsgrad ist, können in einem ersten Verfahren, Durchschnittswerte für den Verbrauch gebildet werden, um den Fahrzeugeinfluss und/oder die anderen genannten Einflüsse zu eliminieren. Anschließend können die voraussichtlichen Verbräuche auf Basis von historischen Wäschen hochgerechnet werden. In einem zweiten Verfahren kann der Fahrzeugtyp von gewaschenen und/oder zu waschenden Fahrzeugen auf Basis eines erzeugten Featuremodells berechnet werden. Vor der Wäsche werden Eingangsdaten (z.B. Fahrzeugtyp, Baujahr) eingegeben, aus denen dann ein Fahrzeugtyp ermittelt wird. Weiter kann in einem Speicher eine Datenstruktur hinterlegt sein, die zu jedem Fahrzeugtyp durchschnittliche Verbrauchsdaten speichert. Diese können zur Berechnung der Verbrauchsdaten berücksichtigt werden.

Der Begriff "Waschsubstanzen" ist im Sinne von Substanzen, insbesondere Chemikalien oder natürlichen Substanzen, zu verstehen, die im Rahmen einer Fahrzeugwäsche und/oder einer Wasseraufbereitung für die Fahrzeugwäsche mit einer Fahrzeugwaschanlage (kurz: "Waschanlage") verwendet und z.B. in entsprechenden Vorratsbehältern bereitgestellt werden können. Weiterhin kann unter "Waschsubstanzen" eine einzelne Waschsubstanz oder eine Vielzahl von separaten Waschsubstanzen verstanden werden. Liegen eine Vielzahl von Waschsubstanzen vor, können diese vor dem Waschvorgang in einem bestimmten Verhältnis vermengt werden. Andernfalls oder ergänzend kann die Vielzahl der Waschsubstanzen innerhalb eines Waschvorgang hintereinander, beispielsweise für verschiedene Sub-vorgänge des Waschprozesses, verwendet werden.

Die Waschsubstanzen können in flüssiger und/oder trockener und/oder vaporisierter Form vorliegen. Die Waschsubstanzen können bereits gebrauchsfertig sein. Die Waschsubstanzen können in konzentrierter oder hochkonzentrierter Form vorliegen und/oder können vor der Anwendung in einem vorgegebenen Verhältnis mit anderen Substanzen, beispielsweise Wasser, gemischt werden. Das vorgegebene Verhältnis kann in manchen Anwendungsfällen je nach Fahrzeugeigenschaft variiert werden.

Eine Waschanlage ist eine Vorrichtung, die Waschaggregate oder Reinigungsanordnungen für Fahrzeuge zur Verfügung stellt. Die Reinigungsanordnungen reinigen das Fahrzeug unter Zuhilfenahme und Verwendung der Waschsubstanzen durch direktes Eingreifen der Reinigungsanordnung (Wischen, Putzen, Polieren, Schrubben) oder indirekt (Auftragen von Flüssigkeiten, Dämpfen, Druckluft). Die Waschanlage kann als Portalwaschanlage, Waschstraße und/oder SB-Waschbox (Selbstbedienung) ausgebildet sein. Diese waschen Fahrzeuge vollautomatisch, teilautomatisch oder bieten den Rahmen für eine manuelle Reinigung durch einen Benutzer. Waschanlagen können sowohl Vorrichtungen bezeichnen, die ein einzelnes Auto waschen als auch Vorrichtungen, die mehrere Autos parallel waschen (Waschstraße).

Waschanlagen können verschiedene Programme anbieten, wie beispielsweise eine Vollwäsche oder eine Teilwäsche eines bestimmten Fahrzeugparts oder Programme mit verschiedener Intensität und/oder Dauer der Wäsche (zum Beispiel Schnellwäsche, Intensivwäsche, mit/oder ohne Pflegeprogramm). Auch können die Programme saisonal variieren. So kann im Winter ein Programm angeboten werden, das gezielt den Fahrzeugunterboden wegen eventueller Verunreinigung durch Streusalz reinigt. Im Sommer kann ein Programm angeboten werden, das sich insbesondere auf Verunreinigungen aufgrund von Insekten konzentriert. Die Waschsubstanzen und ihre Konzentration können von der Waschanlage an das entsprechende Programm angepasst werden (waschsubstanz-spezifische Verbrauchsdaten). Insbesondere können dazu historische Verbrauchsdaten für die verschiedenen Programmen im Steuermodul zur Verfügung gestellt werden.

Das Verfahren kann in der Waschanlage und/oder in einem Steuermodul der Waschanlage, zum Beispiel in einer Speicherprogrammierbaren Steuerung (SPS) in einer Recheneinheit angeordnet sein. Das Verfahren kann verteilt ausgeführt werden. Beispielsweise kann ein Teil des Verfahrens auf einer Betreiber-App in Datenaustausch mit dem Steuermodul der Waschanlage ausgeführt werden. Das Steuermodul kann alternativ oder kumulativ auch als mobile Applikation bereitgestellt werden, um beispielsweise den berechneten Auffülldatensatz auf einem mobilen Gerät auszugeben. Alternativ oder kumulativ kann das Steuermodul auf der Waschanlage implementiert sein und die Ausgabe erfolgt über eine drahtlose Kommunikationsschnittstelle auf dem Ausgabegerät (z.B. mobiles Endgerät). Auch kann das Verfahren in einer Cloud ausgeführt werden. Gerade bei einem Waschanlagenbetrieb mit mehreren einzelnen Waschanlagen, die mehrere Fahrzeuge parallel reinigen, kann das Verfahren auf einer einzelnen zentralen Recheneinheit ausgeführt werden. Das Verfahren kann in einem persistenten Speicher (z.B. Flash-Memory) verfügbar gemacht werden, sodass es nach einem Stromausfall oder sonstigen Unterbrechung weiterhin ausgeführt werden kann.

Die Messeinrichtungen können über einen bit-seriellen oder parallelen Datenbus aktuell erfassten Füllstandsdaten an die Einleseschnittstelle übermitteln. Dabei bedeutet "aktuell erfasste Füllstandsdaten", dass der Füllstand der Waschsubstanzen in Echtzeit, d.h. ohne wesentliche Verzögerung, an die Einleseschnittstelle übermittelt wird. Die Füllstandsdaten sind Zustandsdaten, die in einer Ausführungsform der Erfindung kontinuierlich erfasst werden. Es ist auch denkbar, dass die Füllstandsdaten lediglich zu bestimmten Zeitpunkten erfasst werden, zum Beispiel bei der täglichen Inbetriebnahme der Waschanlage. Die Einleseschnittstelle kann die aktuell erfassten Füllstandsdaten in einem peristenten Speicher (Flash-Memory) oder nicht-peristenten Speicher (RAM) zur weiteren Bearbeitung ablegen. Das Einlesen der erfassten Füllstandsdaten über die Einleseschnittstelle kann nach einem PUSH- oder POLL-Protokoll erfolgen, bei dem das Steuermodul die erfassten Füllstände von den Sensoren gezielt von allen oder ausgewählten Waschsubstanzen abfragt (POLLING) oder bei dem die Füllstandsensoren bei Änderungen "ihrer" Messwerte diese an das Steuermodul senden (PUSH). Letzteres hat den Vorteil, dass die Füllstandsdaten nur übertragen werden, wenn sich auch tatsächlich Werte geändert haben. Der Sensor kann die Daten unmittelbar nach Wertänderung absenden und benötigt deshalb keine zusätzlichen Puffer. Im Gegensatz dazu hat das POLLING-Modell den Vorteil, des explizit seriellen und bestimmbaren Verhaltens von Polling-Programmierungen und, dass es sich um eine sehr schnelle Abfrage beispielsweise einer Hardwareanschaltung handelt, die binnen Mikrosekunden den gewünschten Zustand einnimmt. Alternativ kann ein PULL-Modell angewendet werden, bei dem das Steuermodul sich die nächsten Informationen selbst holt, wenn es sie benötigt. Vorteil ist, dass das Steuermodul die Füllstandsdaten nur dann abholt bzw. anfordert, wenn sie in ein vorher festgelegtes Zeitraster fallen. Daten in festen Zeitschritten sind einfacher zu handhaben als ein eventbasiertes Datenhandling. Weiterer Vorteil ist das einfachere Erkennen von Fehlern, die in der Datenerfassung / Datenübertragung auftreten. So kann das Steuermodul z.B. in einer Überlastsituation die Datenübertragung verlangsamen.

In einer Ausführungsform der Erfindung ist die Messeinrichtung eine Anordnung, die das Volumen der noch vorhandenen Waschsubstanz oder das Volumen der bereits verwendeten Waschsubstanz direkt oder indirekt misst. Z. B. kann über eine Druckmesssonde bei bekannter Dichte der zu messenden Substanz oder über Ultraschallsensoren oder Schwimmer oder Kapazitiv die Füllhöhe in einem Behälter bekannter Geometrie Aufschluss über das Füllvolumen des Chemieprodukts geben. Alternativ kann auch das Gewicht des Behälters mit Inhalt gemessen werden, womit sich bei bekannter Dichte der Chemie und dem Leergewicht des Behälters das Volumen der Chemie errechnen lässt. Bei bekannter Behälterfüllmenge kann auch über volumetrisch messende Durchflusssensoren z.B. Ovalradzähler das bekannte Pumpvolumen einer Dosierpumpe, die Restmenge über das gemessene Entnahmevolumen und Differenzbildung ermittelt werden.

In einer besonders bevorzugten Ausführungsform der Erfindung ist die Messeinrichtung ein Füllstandssensor, der den Füllstand der Waschsubstanz in einem Behälter erfasst. Der Füllstandsensor kann auf unterschiedlichen gängigen physikalischen Prinzipien beruhen, wie beispielsweise der mechanischen Füllstandsmessung, der Leitfähigkeitsmessung, der kapazitiven Messung, der optischen Messung, Ultraschall und/oder Radar.

Als mechanische Verfahren kommen Vibrationssensoren, Drehflügelschalter, Schwimmer kombiniert mit einem Wegaufnehmer (z.B. Potentiometer), elektromechanische Lotsysteme, Pegelsonden oder die hydrostatische Füllstandmesser in Betracht.

Die Leitfähigkeitsmessung ordnet der Waschsubstanz eine von dem übrigen Medium in dem Behälter (z.B. Luft) abweichende Leitfähigkeit zu und ermittelt darauf basierend den Füllstand. Dafür wird die Leitfähigkeit der Waschsubstanz und/oder der Luft gemessen und auf die entsprechenden Füllstand geschlossen. Es kann insbesondere die elektrische Leitfähigkeit und/oder die Wärmeleitfähigkeit der Waschmittelsubstand und/oder des anderen Mediums (z.B. Luft) gemessen werden.

Bei der kapazitiven Messung wird die Änderung der Dielektrizitätskonstante zwischen zwei Elektroden erfasst und darauf basierend die Füllhöhe der Waschmittelsubstand von der Messeinrichtung ermittelt. Wenn die Messeinrichtung eine optische Messung durchführt, wird Licht emittiert (z.B. durch eine Infrarot-LED) und an einem Empfänger das Absorptions- und/oder Reflexionsverhalten der Waschsubstanz aufgezeichnet und die Füllhöhe der Waschsubstanz ermittelt. Kumulativ oder alternativ kann die Messeinrichtung Ultraschallwellen von einem entsprechenden Sender absetzen und mittels eines entsprechenden Sensors deren Reflexion erfassen, die Aufschluss über die Laufzeit der Ultraschallwellen zu der Oberfläche der Waschsubstanz geben. Anhand dessen lässt sich auf die Füllhöhe der Waschsubstanz schließen. Auf diesem Sender-Empfängerprinzip beruht ebenfalls die Messung mit Radar, die beispielsweise von der Messeinrichtung ausgeführt werden kann.

Alternativ oder in Ergänzung kann die Messeinrichtung bildbasiert sein und über eine Kamerabildauswertung verfügen. Die Kamerabildauswertung kann über einen Bilderkennungsalgorithmus den Füllstand der Waschsubstanzen in einem Behälter ermitteln. Der Bilderkennungsalgorithmus kann mit einem Verfahren des maschinellen Lernens trainiert werden. Das Verfahren des maschinellen Lernens kann überwacht oder unüberwacht implementiert werden.

Weiterhin kann das Gewicht der Behälter mit der verbleibenden Waschsubstanzen gemessen werden (z.B. durch eine Waage) und unter Berücksichtigung der Dichte der jeweiligen Waschsubstanz und der Abmessungen des Behälters auf den Füllstand in dem Behälter geschlossen werden. Weiterhin kommt ein Schwimmer oder eine Markierung in Verbindung mit einem transparenten Behälter in Kombination mit der oben beschriebenen Kamerabildauswertung in Frage.

Alternativ oder ergänzend kann die Waschanlage mit einer digitalen Pumpe ausgestattet sein, die mit den Behältern mit den Waschsubstanzen verbunden ist. Die digitale Pumpe kann beispielsweise mit einer elektrische Dosierpumpe ausgebildet sein, die das zugeführte Volumen an Waschsubstanzen zur Laufzeit und die Rate der Zuführung von der Messeinrichtung aufzeichnet, woraus sich durch ein Subtraktionsverfahren der verbleibende Füllstand berechnen lässt. Alternativ kann die digitale Pumpe mit einer einfachen pneumatischen Kolbenpumpe ausgebildet sein, die ein fest vorgegebenes oder zumindest vorher einzustellendes Volumen von Waschsubstanz vollständig ausstößt. Die digitale Pumpe hält die Anzahl ihrer Dosierungen fest, um mittels eines Subtraktionsverfahrens den verbleibenden Füllstand berechnen zu können.

Die Prognosefunktion zur Berechnung eines Auffülldatensatz kann unter Berücksichtigung eines "default" Durchschnittswerts, der für eine übliche Fahrzeugwäsche angibt, welche Menge von jeder Waschsubstanz benötigt wird, und den Füllstandsdaten der entsprechenden Waschsubstanz eine Prognose berechnen, wie viele Fahrzeugwäschen mit den aktuell vorhandenen Waschsubstanzen möglich sind. Die Prognosefunktion kann weiterhin Planungsdaten und waschsubstanz-spezifische Verbrauchsdaten berücksichtigen.

Das Nachfüllerfordernis, das in dem berechneten Auffülldatensatz encodiert ist und das spezifisch für jeweils eine der Waschsubstanzen ist, ist in einer bevorzugten Ausführungsform der Erfindung mittels einer konfigurierbaren Datenstruktur strukturiert, sodass angezeigt werden kann, für wie viele der geplanten Wäschen und/oder für welche Fahrzeugtypen (die in einer Datenbank bestimmten Waschprogrammen zugeordnet gespeichert sind) die entsprechende Waschsubstanz noch in ausreichender Menge vorhanden ist. Dabei kann ebenfalls für zumindest einen Parameter (Art der Waschsubstanz, Zeithorizont etc.) zumindest ein Schwellwert zur Ausgabe des Nachfüllerfordernisses in Form einer Nachricht konfiguriert werden, der definiert unter welchen Bedingungen die Nachricht ausgegeben wird (z.B. kann bei einer "wichtigen" Waschsubstanz ein niedriger Schwellenwert konfiguriert werden und/oder bei einem weit in der Zukunft liegenden Nachfüllerfordernis ebenfalls). Hier kann eine Priorisierung der Nachrichtenausgabe erfolgen. Je näher das Nachfüllerfordernis liegt und damit je dringender es ist, desto höher ist die Priorität der Ausgabe auf dem Ausgabegerät (zyklische Anzeige der Nachricht mit kurzer Zykluszeit und/oder Ausgabe auf zusätzlichen Geräten und/oder Ausgabe über zusätzliche Kanäle, z.B. akustisch und/oder LED). Kumulativ oder alternativ kann ein Grenzwert definiert werden, dem bereits zumindest mittelfristig mit einem Nachfüllerfordernis zu rechnen ist. Das Nachfüllerfordernis kann in verschiedenen Einheiten codiert werden. Beispielsweise kann codiert werden, in wie vielen Tagen die Waschsubstanzen nachgefüllt werden müssen, oder wie viele Fahrzeugwäschen mit dem Bestand noch durchgeführt werden können.

Das Ausgabegerät kann ein Terminal direkt an der Waschanlage oder ein mobiles Endgerät sein, das in Datenaustausch mit der Waschanlage steht. Das Ausgabegerät kann auch mehrere Geräte umfassen, sodass an mehreren Stellen gleichzeitig der berechnete Auffülldatensatz ausgegeben werden kann. Alternativ oder ergänzend kann der berechnete Auffülldatensatz an einer zentralen Stelle ausgegeben werden, wie beispielsweise der Überwachungseinrichtung einer Waschanlage mit mehreren einzelnen Waschanlagen. Das Ausgabegerät kann Signale unterschiedlichen Typs erzeugen. Beispielsweise kann das Ausgabegerät den berechneten Auffülldatensatz durch Signale ausgeben, die optisch, akustisch und/oder haptisch (z.B. Vibration) wahrnehmbar sind. Das Ausgabegerät kann die Intensität und den zeitlichen Abstand der Signale variieren. Das Ausgabegerät kann zudem beispielsweise mit einem Händler, der die Waschsubstanzen vertreibt, kommunizieren, um ein Nachfüllerfordernis anzumelden und/oder die entsprechende Waschsubstanz, für die ein Nachfüllerfordernis berechnet wurde, zu bestellen.

Weiterhin kann die Messeinrichtung eine Identifikationseinrichtung beinhalten, die dazu eingerichtet ist, die Waschsubstanz zu identifizieren. Vorzugsweise kann die Identifikationseinrichtung als Applikation (App) implementiert sein, die auf einem mobilen Endgerät installiert ist. Ferner kann auf dem mobilen Endgerät ein Scanner zum Scannen eines digitalen Codes ausgebildet sein, um die Waschsubstanz über den auf dem Vorratsbehälter aufgebrachten die Waschsubstanz identifizierenden Code zu identifizieren.

Vorzugsweise ist die Identifikationseinrichtung ein Scanner, der einen digitalen Code scannt, der an dem Behälter für die Waschsubstanz angebracht ist. Alternativ zu einem Scanner kann eine App eingesetzt werden, über die ein Anwender die manuell erfassten Füllstände über ein sogenanntes "Human-Machine-Interface" (HMI) eingibt. Über das HMI kann ein Anwender per Spracheingabe, Tastenkombination und/oder Click den Behälter der Waschsubstanz identifizieren.

In einer weiteren vorzugsweisen Ausführungsform der Erfindung umfasst das Erfassen der Füllstandsdaten ein direktes Erfassen der Füllstande von Vorratsbehältnissen direkt an der Waschanlage und ein indirektes Erfassen der Füllstände in einem Vorratsbereich der Waschanlage. Die kann insbesondere einen Vorrat in einem Technikraum an oder in der Nähe der Waschanlage betreffen. Dabei kann das "indirekte Erfassen" sich darauf beziehen, dass in einem Speicher (beispielsweise dem oben erwähnten persistenten Speicher) die Anzahl der vorrätigen Behälter in einem Technikraum und deren Volumen abgelegt werden und diese bei Ausführung der Prognosefunktion herangezogen werden.

Die Waschanlage kann über Sensoren verfügen, die über eine entsprechende Auswertung Fahrzeugeigenschaften ermitteln und den Waschvorgang den Fahrzeugeigenschaften anpassen. Die Fahrzeugeigenschaften können konstante und/oder zeitlich veränderliche Eigenschaften betreffen, wie beispielsweise Fahrzeugabmessungen, Fahrzeugtyp, Karosseriebauform (zum Beispiel Cabriolet), Verschmutzungsgrad und/oder Art der Verschmutzung.

Vorzugsweise wird der Verbrauch standortspezifisch ermittelt, also in Abhängigkeit von der Waschanlage, deren Einstellungen und/oder dem Waschprogramm sowie den verkauften Fahrzeugwäschen pro Zeitinkrement. Die Verteilung der geleisteten Fahrzeugwäschen ist stark zeitabhängig. Die Verteilung ist weiter abhängig vom Standort und/oder den Parametern der gekauften Fahrzeugwäschen (umfangreiches, hochqualitatives Programm oder schnelles Programm). Die Verteilung der Fahrzeugwäschen ist abhängig vom Ort der Waschanalage. Handelt es sich um eine Anlage an einer Bundesstraße oder liegt die Anlage bei einem Einkaufszentrum, führt dies zu unterschiedlicher Anzahl Fahrzeugwäschen bzw. zu unterschiedlichen Frequentierungen der Waschanlage. Beispielsweise kann es an einer Bundesstraße insbesondere während der frühen Abendstunden (d.h. nach der typischen Arbeitszeit) zu einer Häufung von Fahrzeugwäschen kommen, während eine Waschanlage an einem Einkaufszentrum beispielsweise an einem Samstag häufiger frequentiert wird als in den frühen Abendstunden.

Die gekauften und/oder geplante Wäschen können auch wetter- und saisonabhängig sein. Dazu kann für das Prognoseverfahren zur Prognose eines Nachfüllerfordernisses ein Zugriff auf eine Datenbank vorgesehen sein, in der die jeweiligen Wetter- und Saisonverhältnisse pro Zeiteinheit gespeichert sind. Die Datenbank kann historische Werte und zukünftige, soweit berechenbar, zur Verfügung stellen. Die vorstehend beschriebene Auswertung der ausgeführten und/oder geplanten Wäschen unter Korrelation mit Wetter- und/oder Saisondaten kann eine weitere Benchmarkingberechnung auslösen, um dem Betreiber zu zeigen, wann welche Verbrauchdaten anfallen und/oder in welchem Zeitraum, welche Waschprogramme ausgeführt werden.

In einer vorzugsweisen Ausführungsform der Erfindung können die Verbrauchsdaten von jeder Wäsche aggregiert werden. Alternativ oder kumulativ können aus den erfassten Verbrauchsdaten Durchschnittsverbrauchswerte ermittelt werden. Die ermittelten Durchschnittsverbrauchswerte sind vorteilhafterweise unabhängig von den jeweiligen Einstellungen von Waschaggregaten der Waschanlage (z.B. Einstellung der Dosierpumpe) und/oder vom Fahrzeugtyp. Die Durchschnittswerte können mit zwei Methoden ermittelt werden. Erstens kann bei einer genauen Dosierpumpe das Volumen der einzelnen Wäschen mit-erfasst und dann aufaddiert werden und durch die Anzahl von Wäsche geteilt werden. Zweitens (wenn zum Beispiel keine ausreichend genaue Pumpe verbaut ist) können die Durchschnittswerte aus den Füllstandsdaten ermittelt werden, die zeitlich beabstandet gemessen werden, z.B. können die Füllstandsdaten zu Beginn und dann wieder nach einer vorkonfigurierten Anzahl von Wäschen, z.B. nach 100 Wäschen, gemessen werden. Die Füllvolumendifferenz / 100 (bzw. geteilt durch die vorkonfigurierte Anzahl) ist dann der ermittelte Durchschnittsverbrauch.

Ferner können die Verbrauchsdaten spezifisch für jede Waschanlage berechnet werden und/oder die Verbrauchsdaten können mit waschanlagen-spezifischen historischen Verbrauchsdaten und/oder mit Wetterdaten und/oder mit Feiertagsdaten korreliert werden.

Weiterhin kann das Steuermodul den berechneten Auffülldatensatz, der ein Nachfüllerfordernis einer jeweiligen Waschsubstanz für die Waschanlage repräsentiert, mit einem Referenzwert abgleichen, der aus Prognosen und/oder historischen Daten der Waschanlage, insbesondere mittels einer Mittelwertbildung, ermittelt wird. Dies hat den Vorteil, dass in einer weiteren bevorzugten Ausführungsform der Erfindung das (z.B. in dem Steuermodul) implementierte Verfahren selbstoptimierend ist, indem die berechneten Prognosedaten gespeichert werden und später mit den real gemessenen Daten vergleiche, um den Prognosealgorithmus kontinuierlich zu verbessern.

Vorzugsweise kann der berechnete und ausgegebene Auffülldatensatz zur Prognose eines Nachfüllerfordernisses eine aufsteigende Alarmierung umfassen, in Abhängigkeit von einem zeitlichen Abstand zu dem (bevorstehenden) Nachfüllerfordernis. Dabei kann die aufsteigende Alarmierung derart ausgestaltet sein, dass mit sinkendem Vorrat, die Priorität der Alarmmeldung erhöht wird und dies beispielsweise mit einem kürzeren Zeitintervall einer Ausgabe und/oder Ausgabe auf unterschiedlichen Geräten und/oder über unterschiedliche Kanäle vermittelt wird. Weiterhin kann auch die Intensität der Alarmmeldung intensiviert werden, beispielsweise durch lauter werdende akustische und/oder stärker werdende optische Signale.

Das Verfahren kann kontinuierlich im Hintergrund der Waschanlage ausgeführt werden. Alternativ oder ergänzend kann das Verfahren auch zu nur zu besonderen Gelegenheiten (bei der täglichen Inbetriebnahme der Waschanlage oder zu einem täglichen Check-up) ausgeführt werden.

Vorstehend wurde die Lösung der Aufgabe anhand des Verfahrens beschrieben. Dabei erwähnte Merkmale, Vorteile oder alternative Ausführungsformen sind ebenso auch auf die anderen beanspruchten Gegenstände zu übertragen und umgekehrt. Mit anderen Worten können auch die gegenständlichen Ansprüche (die beispielsweise auf ein Steuermodul oder ein System oder auf ein Computerprogramm gerichtet sind) mit den Merkmalen weitergebildet sein, die in Zusammenhang mit dem Verfahren beschrieben oder beansprucht sind und umgekehrt. Die entsprechenden funktionalen Merkmale des Verfahrens werden dabei durch entsprechende gegenständliche Module, insbesondere durch Hardware-Module oder Mikroprozessor-Module, des Systems bzw. des Produktes ausgebildet und umgekehrt. Die vorstehend beschriebenen vorteilhaften Ausführungsform der Erfindung des Verfahrens können auch in dem Steuermodul umgesetzt sein. Die im Zusammenhang mit dem Verfahren beschriebenen vorteilhaften Ausführungsform und weiteren Merkmale werden an dieser Stelle nicht separat wiederholt.

Gemäß einem zweiten Aspekt wird die erfindungsgemäße Aufgabe gelöst durch ein Steuermodul für eine Waschanlage zur Ausführung einer Fahrzeugwäsche, wobei das Steuermodul zum Bereitstellen eines Auffülldatensatzes zur Prognose eines Nachfüllerfordernisses für Waschsubstanzen bestimmt ist. Das Steuermodul umfasst:
- Zumindest eine Messeinrichtung zum Erfassen von aktuellen Füllstandsdaten für jede der Waschsubstanzen;
- Eine Datenverbindung zwischen der zumindest einen Messeinrichtung und dem Steuermodul zum Übermitteln der erfassten Füllstandsdaten an das Steuermodul;
- wobei das Steuermodul zum Ausführen einer Prognosefunktion bestimmt ist zur Berechnung eines Auffülldatensatzes, in dem eine Prognose des Nachfüllerfordernisses encodiert ist, auf Basis von Planungsdaten, die geplante Fahrzeugwäschen an der Waschanlage unter Berücksichtigung von waschsubstanz-spezifischen Verbrauchsdaten und den erfassten Füllstandsdaten repräsentieren
- Mit einem Ausgabegerät, das dazu bestimmt ist, den vom Steuermodul berechneten Auffülldatensatz zur Prognose eines waschsubstanz-spezifischen Nachfüllerfordernisses auszugeben.

Gemäß einem dritten Aspekt wird die erfindungsgemäße Aufgabe gelöst durch ein System zum Bereitstellen eines Auffülldatensatzes zur Prognose eines Nachfüllerfordernisses für Waschsubstanzen für eine Fahrzeugwäsche. Das System beinhaltet oben beschriebenes Steuermodel und eine Waschanlage zum Ausführen der Fahrzeugwäsche.

Gemäß einem vierten Aspekt wird die erfindungsgemäße Aufgabe gelöst durch ein Computerprogramm. Das Computerprogramm ist in eine Speichereinheit einer Recheneinheit ladbar und enthält Programmcodeabschnitte, um die Recheneinheit zu veranlassen, das Verfahren zur Prognose eines Nachfüllerfordernisses für Waschsubstanzen für eine Waschanlage gemäß dem oben beschriebenen Verfahren auszuführen, wenn das Computerprogramm in der Recheneinheit ausgeführt wird.

In der nachfolgenden detaillierten Figurenbeschreibung werden nicht einschränkend zu verstehenden Ausführungsbeispielen mit deren Merkmalen und weiteren Vorteilen anhand der Zeichnungen besprochen.

### Kurze Beschreibung der Figuren

- Fig. 1: zeigt in einer schematischen Darstellung ein Ausführungsbeispiel eines erfindungsgemäßen Steuermoduls für eine Waschanlage;
- Fig. 2: zeigt in einer schematischen Darstellung ein erstes Ausführungsbeispiel eines erfindungsgemäßen Systems mit einem Steuermodul und einer Waschanlage;
- Fig. 3: zeigt in einer schematischen Darstellung ein zweites Ausführungsbeispiel eines erfindungsgemäßen Systems mit einem Steuermodul und einer Waschanlage;
- Fig. 4: ist ein Beispiel für ein Ablaufdiagramm für ein erfindungsgemäßes Verfahren zur Prognose eines Nachfüllerfordernisses für Waschsubstanzen;
- Fig. 5: ist ein zweites Beispiel für ein Ablaufdiagramm für ein erfindungsgemäßes Verfahren zur Prognose eines Nachfüllerfordernisses für Waschsubstanzen;
- Fig. 6: ist ein weiteres Beispiel für ein Ablaufdiagramm für ein erfindungsgemäßes Verfahren zur Prognose eines Nachfüllerfordernisses für Waschsubstanzen.

### Detaillierte Beschreibung der Figuren

Im Folgenden wird die Erfindung anhand von Ausführungsbeispielen in Zusammenhang mit den Figuren näher beschrieben.

Der Schutzbereich der vorliegenden Erfindung ist durch die Ansprüche gegeben und wird durch die in der Beschreibung erläuterten oder den Figuren gezeigten Merkmale nicht beschränkt.

Die vorliegende Erfindung betrifft ein Verfahren, Steuermodul, System und Computerprogramm zur Prognose eines Nachfüllerfordernisses für Waschsubstanzen zur Ausführung einer Fahrzeugwäsche mittels einer Waschanlage

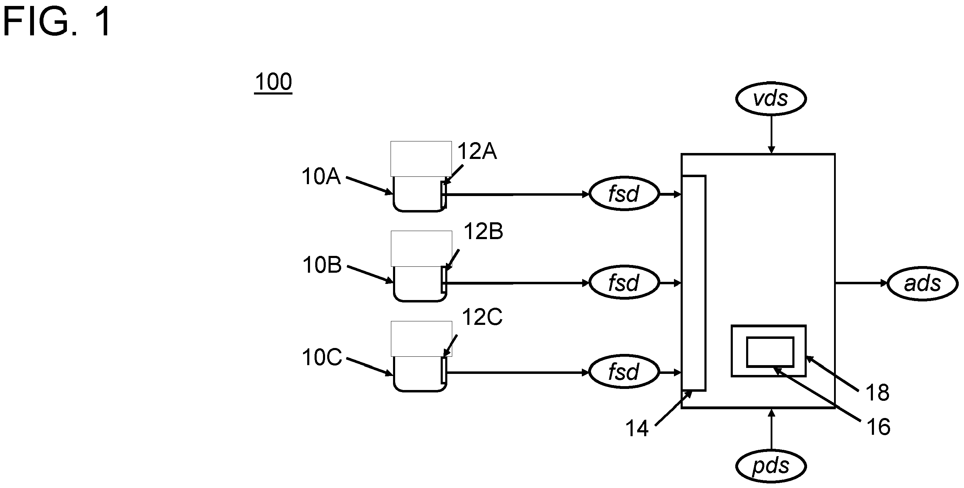

**Fig. 1** zeigt in einer schematischen Darstellung ein Ausführungsbeispiel eines erfindungsgemäßen Steuermoduls 100 für eine Waschanlage. Das Steuermodul 100 kann auch, anders als in Fig. 1 gezeigt, als verteiltes System ("distributed system") ausgebildet sein. Das Steuermodul 100 weist eine Einleseschnittstelle 14 auf. Über die Einleseschnittstelle 14 werden die Füllstandsdaten fsd eingelesen. Die Füllstandsdaten fsd werden von den Messeinrichtung 12A, 12B, 12C an der Einleseschnittstelle 14 des Steuermoduls 100 bereitgestellt. Die Messeinrichtung 12A, 12B, 12C erfassen mit den Füllstandsdaten fsd den aktuellen Füllstand der Behälter 10A, 10B, 10C. In den Behältern 10A, 10B, 10C befinden sich Waschsubstanzen. Die Behälter 10A, 10B, 10C stellen verschiedene Waschsubstanzen bereit, deren Füllstand von den Messeinrichtungen 12A, 12B, 12C kontinuierlich oder zu bestimmten Zeitpunkten überwacht wird. Obwohl die Messeinrichtungen 12A, 12B, 12C hier als individuelle Messeinrichtungen dargestellt werden, kann auch eine zentrale Messeinrichtung den Füllstand der jeweiligen Behälter erfassen. Weiterhin kann das Steuermodul 100 über Schnittstellen (nicht gezeigt) Verbrauchsdaten *vds* und Planungsdaten Planungsdaten *pds* einlesen.

In einem möglichen Ausführungsbeispiel kann die Einleseschnittstelle 14 z.B. über ein proprietäres CAN-Protokoll (CAN: Controller Area Network) auf einem CAN-Bus realisiert sein. Die Sensoren sind Füllstandssensoren mit Reed-Kette, die von einer Auswerteelektronik, die vorzugsweise in der Dosierpumpe angeordnet sein kann, ausgewertet werden. Alternativ kann auch statt einer Dosierpumpe eine dezentrale IO-Karte mit Auswerteelektronik verwendet werden, die das Auswerteergebnis dann auch auf den CAN-Bus umsetzt. Der CAN-Bus bzw. das CAN-Bus-System kann mit einer Datenübertragungsgeschwindigkeit von bis zu 1 Mbit/s für den seriellen Datenaustausch zwischen Sensoren und/oder Steuergeräten ausgebildet sein. Je nach Version des Bus-Systems verfügt jedes der vernetzten Geräte (Steuermodul, Dosierpumpe mit einer elektronischen Einheit und/oder Sensoren etc.) über eine CAN-Schnittstelle (Bus-Controller + Bus-Transceiver), um an den Bus angeschlossen zu sein. Das Gerät kann zunächst prüfen, ob die über den Bus gesendeten Datenpakete von Bedeutung für das Gerät sind. Das geschieht über sogenannte Identifiers, die in jedem Datenpaket enthalten sind und Auskunft über Dateninhalt und die Priorität der Information geben. Sollten mehrere Steuergeräte gleichzeitig versuchen, Informationen zu senden, wird überprüft, welche Nachricht die höchste Priorität hat. Diese Nachricht wird zuerst versendet, die anderen Nachrichten folgen nach Priorität, sobald der Bus wieder frei ist. Der CAN-Bus kann darüber hinaus fehlerhafte Übertragungen erkennen und entsprechend wiederholen.

In dem Speicher 18 des Steuermoduls 100 befindet sich die implementierte Prognosefunktion 16. Die Prognosefunktion 16 wird vom Steuermodul 100 ausgeführt, um einen Auffülldatensatz *ads* zu berechnen. In dem Auffülldatensatz ads encodiert das Steuermodul 100 eine Prognose eines Nachfüllerfordernisses einer der Behälter 10A, 10B, 10C. Das Steuermodul 100 übermittelt den Auffülldatensatz ads an ein Anzeigegerät 19, beispielsweise einen Bildschirm.

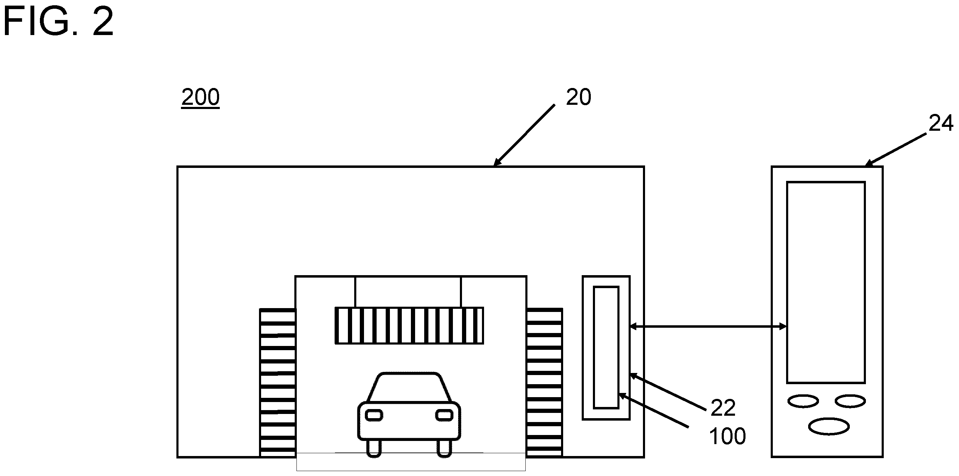

**Fig. 2** zeigt in einer schematischen Darstellung ein erfindungsgemäßen System 200 mit einem Steuermodul 100 und einer Waschanlage 20, die in der schematischen Darstellung durch ein Waschanlagen-Terminal einer Portalwaschanlage symbolisiert wird. Das Steuermodul 100 ist Teil einer Recheneinheit 22. Die Recheneinheit 22 ist an dem Terminal der Waschanlage 20 installiert. Die Recheneinheit 22 kann mit einem Ausgabegerät 24, das hier als ein mobiles Endgerät dargestellt ist, kommunizieren. Im vorliegenden Fall findet eine drahtlose Kommunikation statt. Die Ausgabe auf dem mobilen Endgerät kann auf unterschiedliche Weise erfolgen. Beispielsweise können akustische, optische und/oder haptische Signale (Vibration) oder eine Kombination dieser ausgegeben werden.

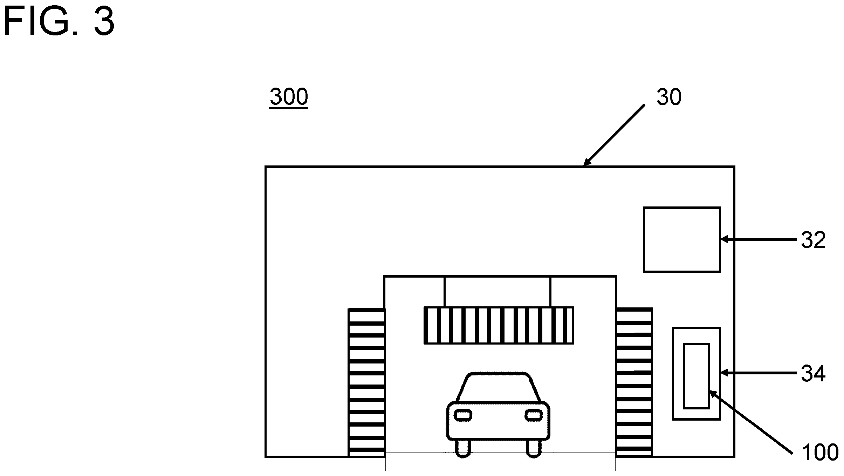

**Fig. 3** illustriert ein Beispiel einer weiteren Ausführungsform eines erfindungsgemäßen Systems mit einem Steuermodul 100 und einer Waschanlage 30. In diesem Beispiel ist das Steuermodul 100 in einer Speicherprogrammierten Steuerung 34 an der Waschanlage 30 implementiert. Auch das Ausgabegerät, das hier als Bildschirm 32 ausgebildet ist, ist an der Waschanlage 30 angeordnet.

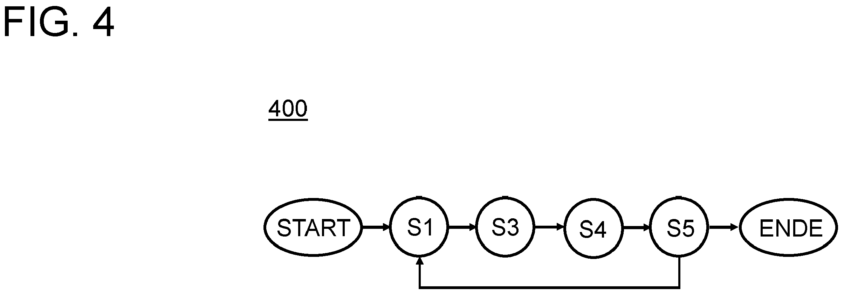

**Fig. 4** zeigt ein Beispiel für ein Ablaufdiagramm für ein erfindungsgemäßes Verfahren 400 zur Prognose eines Nachfüllerfordernisses für Waschsubstanzen. Das Verfahren wird von dem oben beschriebenen Steuermodul 100 ausgeführt. Beim Ausführen des Verfahrens (START) können eine Abfolge von Schritten ausgeführt werden, insbesondere die Schritte S1 bis S5 ab. In einem ersten Schritt S1 werden die aktuell erfassten Füllstandsdaten *fsd* eingelesen für jede der Waschsubstanzen in den Behältern 10A, 10B, 10C. Die Füllstandsdaten fsd werden von den Messeinrichtungen 12A, 12B, 12C zur Verfügung gestellt. Die Füllstandsdaten fsd werden über die Einleseschnittstelle 14 des Steuermoduls 100 eingelesen.

In Schritt S3 führt das Steuermodul 100 die Prognosefunktion 16 aus, die in einem Speicher 18 des Steuermoduls 100 abgelegt ist. Die Prognosefunktion 16 dient dazu, in Schritt S4 den Auffülldatensatz ads, in dem eine Prognose des Nachfüllerfordernisses endcodiert ist, zu berechnen. Der Auffülldatensatz ads repräsentiert das Nachfüllerfordernis auf Basis von Planungsdaten, den geplanten Fahrzeugwäschen an der Waschanlage und berücksichtigt waschsubstanz-spezifische Verbrauchsdaten sowie die erfassten Füllstandsdaten fsd.

In Schritt S5 sieht das Verfahren 400 vor, dass der berechnete Auffülldatensatz zur Prognose eines waschsubstanz-spezifischen Nachfüllerfordernisses auf dem Ausgabegerät 20 ausgegeben wird. Das kann beispielsweise auf dem mobilen Endgerät 24 aus Fig. 2 oder dem Bildschirm 32 aus Fig. 3 erfolgen. Das Verfahren kann hier enden oder zurück zu Schritt S1 verzweigen und dort ein oder mehrere weiter Male ausgeführt werden. In diesem Ausführungsbeispiel werden nur die Schritte S1, S3 und S5 ausgeführt.

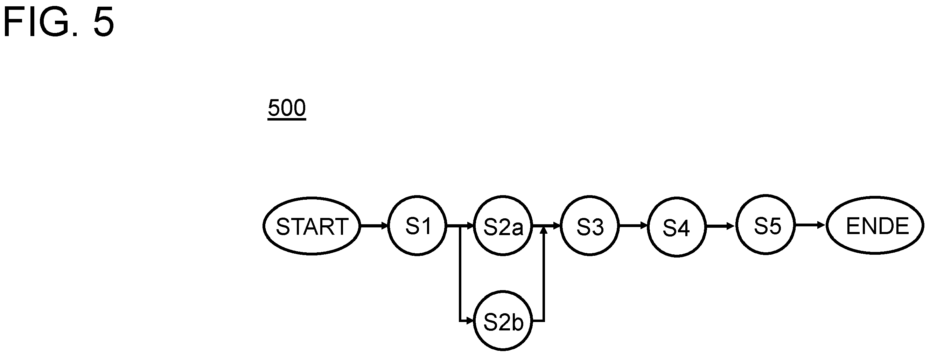

**Fig. 5** ist ein zweites Beispiel für ein Ablaufdiagramm für ein erfindungsgemäßes Verfahren 500 zur Prognose eines Nachfüllerfordernisses für Waschsubstanzen. Dieses Verfahren sieht im Vergleich zum Verfahren 400 insbesondere zumindest einen weiteren Schritt S2a vor. Im Schritt S2a werden die Füllstände in den Vorratsbehältnissen direkt an der Waschanlage 20,30 eingelesen. Dies kann über eine Menge von - mitunter unterschiedlichen - Füllstandssensoren erfolgen. Kumulativ kann ein Schritt S2b ausgeführt werden, in dem die Füllstände in den jeweiligen Vorratsbehältnissen eingelesen werden, die nicht direkt bzw. noch nicht aktuell an die Waschanlage 20, 30 angeschlossen sind, sondern sich z.B. in einem Vorratsbereich befinden.

In einem weiteren nicht dargestellten Ausführungsbeispiel kann ein weiterer Schritt S1a ausgeführt werden. In Schritt S1a wird anhand einer Identifikationseinrichtung der Messeinrichtung eine der Waschsubstanzen identifiziert. Dazu kann z.B. ein Scanner ausgebildet sein, der einen digitalen Code scannt, der an dem Behälter für die Waschsubstanz angebracht ist.

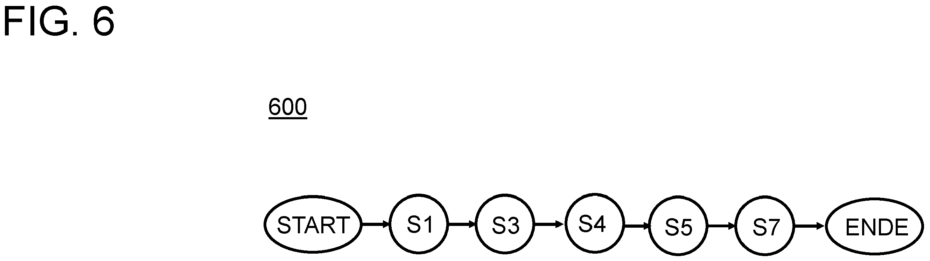

**Fig. 6** ist ein weiteres Beispiel für ein Ablaufdiagramm für ein erfindungsgemäßes Verfahren zur Prognose eines Nachfüllerfordernisses für Waschsubstanzen. Dieses Verfahren sieht im Vergleich zum Verfahren 400 insbesondere einen weiteren Schritt S7 vor. Im Schritt S7 gleicht das Steuermodul 100 den berechneten Auffülldatensatz, der ein Nachfüllerfordernis einer jeweiligen Waschsubstanz für die Waschanlage repräsentiert, mit einem Referenzwert ab. Der Referenzwert wird aus Prognosen und/oder historischen Daten der Waschanlage, insbesondere mittels einer Mittelwertbildung, ermittelt.

Die Verfahren 500 aus Fig. 5 und 600 aus Fig. 6 lassen sich auch kombinieren.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur für die genannten Sensordaten angewendet werden kann, sondern auch für andere messtechnisch erfasste Größen, aus denen sich ein Nachfüllerfordernis der Waschsubstanzen ermitteln lässt.

### Bezugszeichenliste

- 100: Steuermodul
- 10A, 10B, 10C: Behälter mit Waschsubstanz
- 12A, 12B, 12C: Messeinrichtung
- *fsd*: Füllstandsdaten
- *vds*: Verbrauchsdaten
- pds: Planungsdaten
- *ads*: Auffülldatensatz
- 14: Einleseschnittstelle
- 16: Prognosefunktion
- 18: Speicher
- 19: Ausgabegerät
- 200: Systems mit einem Steuermodul und einer Waschanlage
- 20: Waschanlage
- 22: Recheneinheit
- 24: Ausgabegerät
- 30: Waschanlage
- 32: Ausgabegerät
- 34: Speicherprogrammierbare Steuerung
- 400, 500, 600: erfindungsgemäße Verfahren
- S1 bis S7: Verfahrensschritte

## Patentansprüche

1. Verfahren (400) zur Prognose eines Nachfüllerfordernisses für Waschsubstanzen zur Ausführung einer Fahrzeugwäsche mittels einer Waschanlage (20, 30), umfassend folgende Verfahrensschritte:
- Einlesen (S1) von aktuell erfassten Füllstandsdaten (fsd) für jede der Waschsubstanzen mittels jeweils einer Messeinrichtung (12A, 12B, 12C), wobei das Einlesen über eine Einleseschnittstelle (14) erfolgt;
- Auf einem Steuermodul (100): Ausführen (S3) einer Prognosefunktion zur Berechnung (S4) eines Auffülldatensatzes (ads), in dem eine Prognose des Nachfüllerfordernisses encodiert ist, auf Basis von Planungsdaten (*pds*), die geplante Fahrzeugwäschen an der Waschanlage unter Berücksichtigung von waschsubstanz-spezifischen Verbrauchsdaten *(vds)* und den erfassten Füllstandsdaten (fsd) repräsentieren und
- Ausgeben (S5) des berechneten Auffülldatensatzes (ads) zur Prognose eines waschsubstanz-spezifischen Nachfüllerfordernisses auf einem Ausgabegerät (20).

2. Verfahren nach Anspruch 1, bei dem die Messeinrichtung (12A, 12B, 12C) ein Füllstandssensor ist, der den Füllstand der Waschsubstanz in einem Behälter (10A, 10B, 10C) erfasst.

3. Verfahren nach einem der vorangehenden Ansprüche, bei dem die Messeinrichtung (12A, 12B, 12C) eine Identifikationseinrichtung umfasst oder mit dieser in Datenaustausch steht, wobei die Identifikationseinrichtung dazu eingerichtet ist, die Waschsubstanz zu identifizieren (S1a).

4. Verfahren nach dem unmittelbar vorangehenden Anspruch, bei dem die Identifikationseinrichtung ein Scanner ist, der einen digitalen Code scannt, der an dem Behälter (10A, 10B, 10C) für die Waschsubstanz angebracht ist.

5. Verfahren nach einem der vorangehenden Ansprüche, bei dem das Einlesen der Füllstandsdaten ein direktes Erfassen (S2a) der Füllstande an der Waschanlage und optional ein indirektes Erfassen (S2b) der Füllstände in einem Vorratsbereich der Waschanlage (20, 30) umfasst.

6. Verfahren nach einem der vorangehenden Ansprüche, bei dem die Verbrauchsdaten *(vds)* für jeweils eine Waschsubstanz berechnet werden aus einer erfassten Dosiereinstellung einer digitalen Pumpe, die zum Bereitstellen der jeweiligen Waschsubstanz verwendet wird.

7. Verfahren nach einem der vorangehenden Ansprüche, bei dem die Verbrauchsdaten *(vds)* von jeder oder von ausgewählten Wäschen aggregiert werden und/oder bei dem aus den erfassten Verbrauchsdaten Durchschnittsverbrauchswerte ermittelt werden.

8. Verfahren nach einem der vorangehenden Ansprüche, bei dem die Verbrauchsdaten *(vds)* spezifisch für jede Waschanlage (20, 30) berechnet werden und/oder wobei die Verbrauchsdaten *(vds)* mit waschanlagen-spezifischen historischen Verbrauchsdaten und/oder mit Wetterdaten und/oder mit Feiertagsdaten korreliert werden.

9. Verfahren nach einem der vorangehenden Ansprüche, bei dem das Steuermodul (100) den berechneten Auffülldatensatz (ads), der ein Nachfüllerfordernis einer jeweiligen Waschsubstanz für die Waschanlage (20, 30) repräsentiert, mit einem Referenzwert abgleicht, der aus Prognosen und/oder historischen Daten der Waschanlage (20, 30), insbesondere mittels einer Mittelwertbildung, ermittelt wird.

10. Verfahren nach einem der vorangehenden Ansprüche, bei dem der berechnete und ausgegebene Auffülldatensatz (ads) zur Prognose eines Nachfüllerfordernisses eine aufsteigende Alarmierung umfasst, in Abhängigkeit von einem zeitlichen Abstand zu dem bevorstehenden Nachfüllerfordernis.

11. Steuermodul (100) für eine Waschanlage (20, 30) zur Ausführung einer Fahrzeugwäsche, wobei das Steuermodul (100) zum Bereitstellen eines Auffülldatensatzes (*ads*) zur Prognose eines Nachfüllerfordernisses für Waschsubstanzen bestimmt ist, umfassend:
- Zumindest eine Messeinrichtung (12A, 12B, 12C) zum Erfassen von aktuellen Füllstandsdaten (fsd) für jede der Waschsubstanzen;
- Eine Datenverbindung zwischen der zumindest einen Messeinrichtung (12A, 12B, 12C) und dem Steuermodul (100) zum Übermitteln der erfassten Füllstandsdaten (*fsd*) an das Steuermodul (100);
- wobei das Steuermodul (100) zum Ausführen einer Prognosefunktion bestimmt ist zur Berechnung eines Auffülldatensatzes (ads), in dem eine Prognose des Nachfüllerfordernisses encodiert ist, auf Basis von Planungsdaten (*pds*), die geplante Fahrzeugwäschen an der Waschanlage unter Berücksichtigung von waschsubstanz-spezifischen Verbrauchsdaten *(vds)* und den erfassten Füllstandsdaten (fsd) repräsentieren und
- einem Ausgabegerät (20), das dazu bestimmt ist, den vom Steuermodul (100) berechneten Auffülldatensatz (ads) zur Prognose eines waschsubstanz-spezifischen Nachfüllerfordernisses auszugeben.

12. System zum Bereitstellen eines Auffülldatensatzes (ads) zur Prognose eines Nachfüllerfordernisses für Waschsubstanzen für eine Fahrzeugwäsche, mit:
- Einem Steuermodul (100) gemäß dem vorangehenden Anspruch und
- Einer Waschanlage (20; 30) zum Ausführen der Fahrzeugwäsche.

13. Computerprogramm, wobei das Computerprogramm in eine Speichereinheit einer Recheneinheit ladbar ist und Programmcodeabschnitte enthält, um die Recheneinheit zu veranlassen, das Verfahren zur Prognose eines Nachfüllerfordernisses für Waschsubstanzen für eine Waschanlage gemäß einem der Verfahrensansprüche auszuführen, wenn das Computerprogramm in der Recheneinheit ausgeführt wird.

## Geänderte Patentansprüche

### Geänderte Patentansprüche gemäss Regel 137(2) EPÜ.

1. Computer-implementiertes Verfahren (400; 500; 600) zur Prognose eines Nachfüllerfordernisses für Waschsubstanzen zur Ausführung einer Fahrzeugwäsche mittels einer Waschanlage (20, 30), umfassend folgende Verfahrensschritte:
- Einlesen (S1) von aktuell erfassten Füllstandsdaten (*fsd*) für jede der Waschsubstanzen mittels jeweils einer Messeinrichtung (12A, 12B, 12C), wobei das Einlesen über eine Einleseschnittstelle (14) erfolgt;
- Auf einem Steuermodul (100): Ausführen (S3) einer Prognosefunktion zur Berechnung (S4) eines Auffülldatensatzes (ads), in dem eine Prognose des Nachfüllerfordernisses encodiert ist, auf Basis von Planungsdaten *(pds),* die geplante Fahrzeugwäschen an der Waschanlage unter Berücksichtigung von waschsubstanz-spezifischen Verbrauchsdaten *(vds)* und den erfassten Füllstandsdaten (*fsd*) repräsentieren; und
- Ausgeben (S5) des berechneten Auffülldatensatzes (ads) zur Prognose eines waschsubstanz-spezifischen Nachfüllerfordernisses auf einem Ausgabegerät (20).

2. Verfahren (400; 500; 600) nach Anspruch 1, bei dem die Messeinrichtung (12A, 12B, 12C) ein Füllstandssensor ist, der den Füllstand der Waschsubstanz in einem Behälter (10A, 10B, 10C) erfasst.

3. Verfahren (400; 500; 600) nach einem der vorangehenden Ansprüche, bei dem die Messeinrichtung (12A, 12B, 12C) eine Identifikationseinrichtung umfasst oder mit dieser in Datenaustausch steht, wobei die Identifikationseinrichtung dazu eingerichtet ist, die Waschsubstanz zu identifizieren (S1a).

4. Verfahren (400; 500; 600) nach dem unmittelbar vorangehenden Anspruch, bei dem die Identifikationseinrichtung ein Scanner ist, der einen digitalen Code scannt, der an dem Behälter (10A, 10B, 10C) für die Waschsubstanz angebracht ist.

5. Verfahren (400; 500; 600) nach einem der vorangehenden Ansprüche, bei dem das Einlesen der Füllstandsdaten ein direktes Erfassen (S2a) der Füllstande an der Waschanlage und optional ein indirektes Erfassen (S2b) der Füllstände in einem Vorratsbereich der Waschanlage (20, 30) umfasst.

6. Verfahren (400; 500; 600) nach einem der vorangehenden Ansprüche, bei dem die Verbrauchsdaten *(vds)* für jeweils eine Waschsubstanz berechnet werden aus einer erfassten Dosiereinstellung einer digitalen Pumpe, die zum Bereitstellen der jeweiligen Waschsubstanz verwendet wird.

7. Verfahren (400; 500; 600) nach einem der vorangehenden Ansprüche, bei dem die Verbrauchsdaten *(vds)* von jeder oder von ausgewählten Wäschen aggregiert werden und/oder bei dem aus den erfassten Verbrauchsdaten Durchschnittsverbrauchswerte ermittelt werden.

8. Verfahren (400; 500; 600) nach einem der vorangehenden Ansprüche, bei dem die Verbrauchsdaten *(vds)* spezifisch für jede Waschanlage (20, 30) berechnet werden und/oder wobei die Verbrauchsdaten *(vds)* mit waschanlagen-spezifischen historischen Verbrauchsdaten und/oder mit Wetterdaten und/oder mit Feiertagsdaten korreliert werden.

9. Verfahren (400; 500; 600) nach einem der vorangehenden Ansprüche, bei dem das Steuermodul (100) den berechneten Auffülldatensatz (ads), der ein Nachfüllerfordernis einer jeweiligen Waschsubstanz für die Waschanlage (20, 30) repräsentiert, mit einem Referenzwert abgleicht, der aus Prognosen und/oder historischen Daten der Waschanlage (20, 30), insbesondere mittels einer Mittelwertbildung, ermittelt wird.

10. Verfahren (400; 500; 600) nach einem der vorangehenden Ansprüche, bei dem der berechnete und ausgegebene Auffülldatensatz (ads) zur Prognose eines Nachfüllerfordernisses eine aufsteigende Alarmierung umfasst, in Abhängigkeit von einem zeitlichen Abstand zu dem bevorstehenden Nachfüllerfordernis.

11. Steuermodul (100) für eine Waschanlage (20, 30) zur Ausführung einer Fahrzeugwäsche, wobei das Steuermodul (100) zum Bereitstellen eines Auffülldatensatzes (ads) zur Prognose eines Nachfüllerfordernisses für Waschsubstanzen bestimmt ist, umfassend:
- Zumindest eine Messeinrichtung (12A, 12B, 12C) zum Erfassen von aktuellen Füllstandsdaten (*fsd*) für jede der Waschsubstanzen;
- Eine Datenverbindung zwischen der zumindest einen Messeinrichtung (12A, 12B, 12C) und dem Steuermodul (100) zum Übermitteln der erfassten Füllstandsdaten (*fsd*) an das Steuermodul (100);
- Wobei das Steuermodul (100) zum Ausführen einer Prognosefunktion bestimmt ist zur Berechnung eines Auffülldatensatzes (ads), in dem eine Prognose des Nachfüllerfordernisses encodiert ist, auf Basis von Planungsdaten *(pds),* die geplante Fahrzeugwäschen an der Waschanlage unter Berücksichtigung von waschsubstanz-spezifischen Verbrauchsdaten *(vds)* und den erfassten Füllstandsdaten (*fsd*) repräsentieren; und
- einem Ausgabegerät (20), das dazu bestimmt ist, den vom Steuermodul (100) berechneten Auffülldatensatz (ads) zur Prognose eines waschsubstanz-spezifischen Nachfüllerfordernisses auszugeben.

12. System (200; 300) zum Bereitstellen eines Auffülldatensatzes (ads) zur Prognose eines Nachfüllerfordernisses für Waschsubstanzen für eine Fahrzeugwäsche, mit:
- Einem Steuermodul (100) gemäß dem vorangehenden Anspruch und
- Einer Waschanlage (20; 30) zum Ausführen der Fahrzeugwäsche.

13. Computerprogramm, wobei das Computerprogramm in eine Speichereinheit einer Recheneinheit ladbar ist und Programmcodeabschnitte enthält, um die Recheneinheit zu veranlassen, das Verfahren (400; 500; 600) zur Prognose eines Nachfüllerfordernisses für Waschsubstanzen für eine Waschanlage gemäß einem der Verfahrensansprüche auszuführen, wenn das Computerprogramm in der Recheneinheit ausgeführt wird.
